# EUROPEAN PATENT APPLICATION

(11) **EP 1 707 584 A1**
(43) Date of publication of application: **04.10.2006**
(21) Application number: 06006403.7
(22) Date of filing: 28.03.2006
(51) Int. Cl.: C08G 18/76, C08G 18/10, C08G 18/12

(54) **Novel polyurea isocyanates**

(30) Priority: 29.03.2005 US 91985
(71) Applicant: Air Products and Chemicals, Inc., Allentown, PA 18195-1501 (US)
(72) Inventor: Conner, Mark David, New Tripoli, PA 18066 (US)
(74) Representative: Kador & Partner

(57) **Abstract**

The present invention provides novel prepolymers comprising a blend of a toluene diisocyanate prepolymer, formed from a toluene diisocyanate and a polyol, and a diphenylmethane diisocyanate or a diphenylmethane diisocyanate quasi-prepolymer. The present invention also provides polyurea elastomers comprising the novel prepolymer blends reacted with an amine-terminated chain extender or cross-linker to form the polyurea elastomer. The present invention further provides methods for preparing the novel prepolymers and the polyurea elastomers. The novel polyurea elastomers have improved modulus, tensile properties, adhesion, and surface characteristics and may be applied by spraying, troweling, casting, or caulking.

## Description

### BACKGROUND OF THE INVENTION

The present invention provides novel prepolymers comprising a blend of a toluene diisocyanate prepolymer, formed from a toluene diisocyanate and a polyol, and a diphenylmethane diisocyanate or a diphenylmethane diisocyanate quasi-prepolymer. The present invention also provides polyurea elastomers comprising the novel prepolymer blends reacted with an amine-terminated chain extender or cross-linker to form the polyurea elastomer. The present invention further provides methods for preparing the novel prepolymers and the polyurea elastomers. The novel polyurea elastomers have improved modulus, tensile properties, adhesion, and surface characteristics and may be applied by spraying, troweling, casting, or caulking.

The patent and scientific literature contains numerous examples of spray-applied polyurea coatings. Spray-applied polyurea coatings are two-part coating polyurethaneurea compositions used to coat articles at an elevated temperature and allowed to cure to a corrosion-resistant film. The two-part polyurethaneurea coating is generally applied in a two component spray gun and conventionally termed "A-side" and "B-side" components, the A-side containing the isocyanate-functional components and the B-side containing the isocyanate-reactive components. Both the A-side and B-side desirably have viscosities below 500 cp at the spray temperature in order for sufficient mixing to take place.

While formulations vary, they may be generally divided into two broad classes, aromatic and aliphatic. The aromatic class uses an aromatic polyisocyanate, such as diphenylmethane diisocyanate (MDI, methylene bis isocyanto benzene) including the 2,4'-diphenylmethane diisocyanate and 4,4'-diphenylmethane diisocyanate isomers, and MDI adducts. MDI adducts include MDI prepolymers, quasi-prepolymers (a mixture of prepolymer and high-free MDI monomer level, prepared *in-situ),* mixtures of MDI prepolymers and quasiprepolymers, with other MDI monomer streams. MDI adducts are sometimes prepared using an MDI monomer with a high 2,4'-MDI isomer level to reduce the reactivity and increase the pot life. These properties are generally referred to as gel time and/or tack-free time.

Other useful aromatic polyisocyanates are the toluene diisocyanates (TDI) such as the 2,4-toluene diisocyanate and 2,6-toluene diisocyanate isomers. TDI monomers, quasi prepolymers, and TDI-based materials generally are not used in openly applied polyurea formulations, especially spray applications, due to the toxicity of the TDI monomer. This TDI toxicity, principally due to its high vapor pressure and low flash point, is the reason for the lack of TDI components in many polyurea formulations.

The remaining materials utilized on both the A-side (isocyanate-functional component) and the B-side (isocyanate-reactive component) may include polyalkylene oxide (i.e., polypropylene oxide) reacted into the polyisocyanate component to provide a quasi-prepolymer and an amine-terminated polypropylene oxide having a functionality of 2.0 or higher, such as a Jeffamine®. Typical applications for spray-applied polyurea coatings include "protective coatings" or "liners" such as bedliners for pick-up trucks. Curatives, such as diethyl-toluenediamine (DETDA), may also be employed.

A problem in the industry has been a lack of standardization in terminology. Recent attempts to standardize terminology include arbitrary definitions of "pure polyurea", hybrid "polyurea-polyurethane", and "polyurethane" coatings. Standardization of terminology is needed to define the effect of cure speed and reactivity on the final properties of the cured system and the sensitivity of the system to moisture during the spray application process. These terms focus on the chemistry of the reaction process at the time of application, where the cure speed and potential moisture sensitivity issues arise, as opposed to the chemistry in the manufacture of the individual components.

There is a need in the industry to control cure speed. Cure speed affects many critical properties, including the quality of the coated surface, the ability to "wet-out" the substrate (which can have significant impact on adhesion), the formation of voids and bubbles in the coating, and the overall permeability of the coating to outside agents including water and solvents. The need to control cure speed has led to extensive efforts focused on the polyamine curative side of the formulation. Dorf-Ketal, for example offers a number of products, including Unilink® 4200, which provides longer reaction times extending "gel time" and "tack-free time". "Tack-free time" is typically observed immediately after the gel time on the same material, which had been applied to the vertical surface, which may or may not be the same as the "tack-free time" on a thin film due to the faster loss of heat in a thin film. These parameters are important measures for a formulation since they indicate the time until the coating is no longer "runny" when applied to a vertical surface (an indicator of the ability to build coating thickness), and when the coating loses its tackiness (an indicator of when additional manipulations must be completed) such as spreading of traction aid or aggregate, and can also guide the estimate of the likely time before the coating can support weight for further work in the area (walk-on time or drive-on time). However, little effort has been made to modify the aromatic isocyanate beyond the control of the isomer ratio (2,4':4,4' ratio) in conventional MDI quasi-prepolymers.

U.S. Patent no. 5,925,781 discloses a multistep-process for producing low-free toluene diisocyanate (TDI) monomer prepolymers containing mixed TDI and MDI isocyanate end groups, which are said to have use in spray-applied applications.

U.S. Patent no. 5,962,618 discloses a polyurea spray elastomer system employing MDI quasi-prepolymers containing functional alkoxy silanes for improved adhesion and higher levels of 2,4'-MDI isomer for formation of quasi-prepolymers. Higher levels of 2,4'-MDI are said to be useful in slowing cure time and allowing for slower viscosity build, resulting in thinner coating films and more flexibility in the cured films. The quasi-prepolymers are said to be prepolymers prepared using a high proportion of isocyanate to a polyol component, resulting in a mixture of prepolymer and high (>1 %) levels of free monomer, the level of free monomer increasing as the desired final %NCO increases.

U.S. Patent no. 6,699,528 discloses a corrosion protective coating for marine applications, which uses conventional TDI-polyoxyalkylene prepolymers prepared to a content of 2-12%NCO. The TDI-polyoxyalkylene prepolymers are cured with an amine or polyol to form a polyurea or polyurea-urethane hybrid coating. Viscosities of less than 500cps are disclosed at 150-180°F. The preferred molecular weight of the polyoxyalkylene component (i.e., PTMEG) is 650-1000 daltons and no indication of residual monomeric polyisocyanate is provided.

Spray polyurea technology is further disclosed in Dudley J. Primeaux II (Proceedings of the 32nd Annual Polyurethane Technical Marketing Conference, Oct 1-4, 1989 ; and Modern Paint and Coatings, June 1991), which disclosures are incorporated herein by reference.

### BRIEF SUMMARY OF THE INVENTION

The present invention provides a prepolymer blend comprising:

a) from about 10% to about 90% of a toluene diisocyanate prepolymer, by weight of the prepolymer blend, comprising:

i) from about 10% to about 85% of a toluene diisocyanate, by weight of the toluene diisocyanate prepolymer; and

ii) from about 15% to about 90% of a polyol, by weight of the toluene diisocyanate prepolymer;
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and

b) from about 10% to about 90% of a diphenylmethane diisocyanate or a diphenylmethane diisocyanate quasi-prepolymer, by weight of the prepolymer blend;
wherein the prepolymer blend has an %NCO content from about 5% to about 25%.

The present invention also provides a polyurea elastomer comprising:

A) from about 10% to about 90% of a premixture blend, by weight of the polyurea elastomer, of:

a) from about 10% to about 90% of a toluene diisocyanate prepolymer, by weight of the prepolymer blend, comprising:

i) from about 10% to about 85% of a toluene diisocyanate, by weight of the toluene diisocyanate prepolymer; and

ii) from about 15% to about 90% of a polyol, by weight of the toluene diisocyanate prepolymer;
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and

b) from about 10% to about 90% of a diphenylmethane diisocyanate or a diphenylmethane diisocyanate quasi-prepolymer, by weight of the prepolymer blend;
wherein the prepolymer blend has an %NCO content from about 5% to about 25%; and

B) from about 10% to about 90% of an amine-terminated chain extender or cross-linker, by weight of the polyurea elastomer.

The present invention further provides a method for preparing a prepolymer blend comprising:

a) providing a toluene diisocyanate prepolymer prepared by reacting:

i) from about 10% to about 85% of a toluene diisocyanate, by weight of the toluene diisocyanate prepolymer; and

ii) from about 15% to about 90% of a polyol, by weight of the toluene diisocyanate prepolymer; and

iii) removing monomeric toluene diisocyanate from the toluene diisocyanate prepolymer formed in i) and ii);
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and

b) blending from about 10% to about 90% of the toluene diisocyanate prepolymer from a) with from about 10% to about 90% of a diphenylmethane diisocyanate or a diphenylmethane diisocyanate quasi-prepolymer, by weight of the prepolymer blend; wherein the prepolymer blend has an %NCO content from about 5% to about 25%.

The present invention still further provides a method for preparing a polyurea elastomer comprising the steps of:

A) providing a premixture blend of:

a) a toluene diisocyanate prepolymer prepared by reacting:

i) from about 10% to about 85% of a toluene diisocyanate, by weight of the toluene diisocyanate prepolymer; and

ii) from about 15% to about 90% of a polyol, by weight of the toluene diisocyanate prepolymer; and

iii) removing monomeric toluene diisocyanate from the toluene diisocyanate prepolymer formed in i) and ii);
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and

b) blending from about 10% to about 90% of the toluene diisocyanate prepolymer from a) with from about 10% to about 90% of a diphenylmethane diisocyanate or a diphenylmethane diisocyanate quasi-prepolymer, by weight of the prepolymer blend; wherein the prepolymer blend has an %NCO content from about 5% to about 25%; and

B) reacting from about 10% to about 90% of the premixture blend from A) with from about 10% to about 90% of an amine-terminated chain extender or cross-linker, by weight of the polyurea elastomer, to form the polyurea elastomer.

### DETAILED DESCRIPTION OF THE INVENTION

The present invention provides novel blends of TDI prepolymers with MDI and/or modified MDI systems, which are low in free monomeric TDI content and low in oligomer content. The TDI prepolymer may be prepared such that the residual free monomeric isocyanate is preferably <0.1 % and the oligomer content of the prepolymer is preferably less than about 15%. The novel prepolymer component (A-side, isocyanate and polyol) may also be reacted with a curative agent (B-side) to form novel polyureas. The prepolymers provide a sprayable isocyanate component in a two-component spray polyurea system using conventional two-component spray equipment. The novel polyurea elastomers have improved modulus, tensile properties, adhesion, and surface characteristics and may be applied by a variety of methods including spraying, troweling, casting, or caulking.

The polyureas formed from these blends of low-free monomer, low oligomer TDI prepolymers are slow curing, have low moisture sensitivity during cure, and have higher tensile strength and/or modulus compared to conventional MDI based quasi prepolymers. Slower reactivity in the spray-applied polyurea as measured by gel times, tack free times, and surface tack allows time for aggregate spreading or application of a decorative or functional coating where the tacky surface can function as the adhesive. Slower reactivity also allows for a longer recoat window, where a second coat will adhere an initial coat, and a longer leveling period, providing a smoother, glossier surface which is less porous to outside agents such as water or chemical agents. Low moisture sensitivity during application and curing in a spray polyurea reduces the potential for bubbling and blistering of the coating due to the presence of moisture.

In accordance with the present invention, a prepolymer blend is provided comprising from about 10% to about 90% of a toluene diisocyanate prepolymer and from about 10% to about 90% of a diphenylmethane diisocyanate or a diphenylmethane diisocyanate quasi-prepolymer, by weight of the prepolymer blend. The prepolymer blend has an %NCO content from about 5% to about 25%.

The toluene diisocyanate prepolymer comprises from about 10% to about 85% of a toluene diisocyanate and from about 15% to about 90% of a polyol, by weight of the toluene diisocyanate prepolymer. The functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%.

The prepolymer reaction products are prepared using organic polyisocyanates such as toluene diisocyanates (TDI) and diphenylmethane diisocyanates (MDI). Preferred toluene diisocyanates are the 2,4- and 2,6-toluene diisocyanates, individually or together as their commercially available mixtures. Preferred diphenylmethane diisocyanates are the 2,4'-and 4,4'-diphenylmethane diisocyanates, individually or together as their commercially available mixtures.

The TDI isomer ratio (ratio of 2,4-toluene diisocyanate to 2,6-toluene diisocyanate) used in the production of the low free monomer prepolymers of the present invention is determined by the availability and cost of a particular isomer ratio and the method used in the production. There are three commonly available 2,4/2,6 isomer ratios: the 80/20; 65/35; and the >95% isomer ratios; respectively. The most thermodynamically stable isomer ratio of TDI, and therefore the most widely available and lowest in cost, is the 80/20 isomer ratio of 2,4-TDI to 2,6-TDI. Preferably, the isomer ratio of toluene diisocyanate in the present invention is from about 65% to about 100% of 2,4-toluene diisocyanate and from about 0% to about 35% of 2,6-toluene diisocyanate, and more preferably about 80% of 2,4-toluene diisocyanate and about 20% of 2,6-toluene diisocyanate, by weight. Isomer ratios within the reactive mixture may be freely adjusted in order to provide the desired isomer ratio in the product.

The amount of toluene diisocyanate present in the toluene diisocyanate prepolymer of the present invention is from about 10% to about 85%, preferably from about 10% to about 75%, more preferably from about 10% to about 65%, and most preferably from about 10% to about 50%, by weight of the toluene diisocyanate prepolymer.

The polyisocyanate is normally reacted with a polyether polyol or polyester polyol to prepare the polyurethane prepolymers. As used herein, the term "polyol" refers to a single polyol or a blend of polyols. The hydroxyl-terminated polyethers are typically polyalkylene ether glycols, such as poly(ethylene ether) glycol, poly(propylene ether) glycol and polytetramethylene ether glycol. Other polyethers are prepared by the copolymerization of cyclic ethers, such as ethylene oxide, propylene oxide and trimethylene oxide with various aliphatic diols such as ethylene glycol, butane diols, e.g., 1,3- and 1,4-butane diols, and the like, and combinations thereof, prepared by either block or random coplymerization. Polyester polyols can also be used for producing the polyurethane prepolymers, and these would include hydroxyl terminated polyesters such as polyethylene adipate, polypropylene adipate, polybutylene adipate, polyhexamethylene adipate and copolyesters prepared by copolymerizing ethylene glycol and propylene glycol with the above polyesters, which include poly(1,4-butylene-ethylene) adipate and poly(1,4-butylene-propylene) adipate. The polyol backbone may also be poly(caprolactone). The polyether and polyester polyols may also be blended such that the polyol composition (single or blend) used in making the prepolymer typically has an average Mn ranging from about 250 to 60,000, and typically from 500 to about 25,000. A backbone Mn range consistent with a TDI content of 5-60% is from about 250 to 11000. A backbone Mn range consistent with a TDI content of 10-50% is from about 350 to 4800 with a functionality of 2 to 3.

Combinations of polyols can be used to tailor properties both of the prepolymer, the spray polyurea, and the finished polyurea. Lower molecular weight components such as diethylene glycol, tripropylene glycol, and trimethylol propane may also be incorporated into the polyol blend to be used in the prepolymer manufacture. Lower molecular weight components are described in detail in U.S. Patent no. 5,202,001, which disclosure is incorporated by reference herein.

Preferably, the polyol is selected from the group consisting of poly(tetramethylene glycol), poly(propylene glycol), ethylene oxide capped poly(propylene glycol), poly(ethylene glycol), poly(ethylene adipate), poly(propylene adipate), poly(butylene adipate), poly(caprolactone), diethylene glycol, tripropylene glycol, trimethylol propane, and mixtures thereof.

The polyol is present in the toluene diisocyanate prepolymer in an amount from about 15% to about 90%, preferably from about 25% to about 90%, more preferably from about 35% to about 90%, and most preferably from about 50% to about 90%, by weight of the toluene diisocyanate prepolymer.

The functionality of the polyol, or a mixture thereof, used to prepare the TDI prepolymer, and therefore the functionality of the TDI prepolymer itself, may be between 2 and 3. Functionalities less than 2 tend to leave undesirable chain ends and functionalities greater than 3 typically reduce the flexibility of the finished elastomer beyond the useful range for the type of elastomeric material described herein. A TDI prepolymer having a functionality greater than 3 may be employed providing that the functionality in the finished A-side is within the desired 2 to 3 range in the polyurea spray system.

The %NCO content of the toluene diisocyanate prepolymer is from about 1.5% to about 14%, preferably from about 1.5% to about 13%, more preferably from about 2% to about 12.5%, and most preferably from about 2.5% to about 12%. The viscosity of the toluene diisocyanate prepolymer is from about 50cps to about 5,000cps, preferably from about 50cps to about 3,000cps, more preferably from about 50cps to about 1,500cps, and most preferably from about 50cps to about 1,000cps at 70°C.

The residual free monomeric toluene diisocyanate content of the toluene diisocyanate prepolymer is less than about 0.5%, preferably less than 0.4%, more preferably less than 0.3%, and most preferably less than 0.1 %. Toluene diisocyanate prepolymers containing higher levels of residual free monomeric TDI may be employed when preparing blends providing that the finished A-side contains the above low levels of residual free monomeric TDI.

The oligomer content of the toluene diisocyanate prepolymer is less than about 40%, preferably less than about 30%, more preferably less than about 20%, and most preferably less than about 15%.

High oligomer levels in the toluene diisocyanate prepolymer tend to provide toluene diisocyanate prepolymers with high viscosities. The oligomer content that can be tolerated in the TDI prepolymer depends on the viscosity of the TDI prepolymer, the level of the TDI prepolymer employed in the finished A-side, and the desired viscosity of the finished A-side. Generally, the lower the level of TDI prepolymer employed, the higher viscosity (and therefore the higher oligomer content) of the TDI prepolymer that can be tolerated. At higher oligomer levels (lower NCO/OH ratios) in the TDI prepolymer, the viscosity in the prepolymer is higher which affects the amount of TDI prepolymer that can be used (lower maximum levels in general). TDI prepolymers with higher oligomer levels are useful in applications such as cast and trowelable coatings, where somewhat higher viscosities can be tolerated.

In one commonly used process to prepare a very low oligomer (<15%) and low free TDI monomer (<0.1%), the overall ratio of TDI to polyol should be high such as, for example, from about 4/1 to about 10/1, in order to provide a prepolymer with a low oligomer content. When such high TDI/polyol ratios are employed in the reaction process, generally large amounts of TDI monomer must be removed after the reaction in order to obtain a low residual monomer level. Methods to remove TDI monomers are described in United States patent nos. 5,051,152, 5,202,001, 5,703,193, 5,077,371, which disclosures are incorporated by reference herein. Other methods to remove TDI monomers may also be employed.

As set out above, the toluene diisocyanate prepolymer set out above is blended with a diphenylmethane diisocyanate or a diphenylmethane diisocyanate quasi-prepolymer to form the prepolymer blend of the present invention. Preferred diphenylmethane diisocyanates are the 2,4'-and 4,4'-diphenylmethane diisocyanates, individually or together, as their commercially available mixtures. The MDI isomer ratio (ratio of 2,4'-diphenylmethane diisocyanate to 4,4'-diphenylmethane diisocyanate) used in the production of the prepolymer blends of the present invention is determined by the quantity of the 2,4'-MDI isomer required to maintain the MDI component liquid. It is desirable to maintain the %NCO of the MDI component high relative to the desired final %NCO of the A-side of the spray polyurea system to allow incorporation of significant amounts of the TDI prepolymer. The %NCO and the desired incorporation level of the TDI prepolymer component will determine the selection of the %NCO level of the MDI component. The MDI component may also be maintained in a liquid state by partial oligomerization of the MDI or the MDI component may contain carbodiimide linkages to partially oligomerize the MDI. The actual ratio of the 2,4'-MDI isomer to the 4,4'-MDI isomer is determined by the amount of 2,4'-MDI isomer required to maintain the finished A-side blend in the liquid state, especially at the application temperature. The MDI component may be prepared from any available isomer ratio of MDI, so long as the finished composition of the A-side, or isocyanate-functional side, is a liquid within the desired viscosity range, especially at the usage temperature. There are many variations which can accomplish this desired result including variations in the degree and amount of MDI adduction, partial oligomerization, partial prepolymer formation (i.e. quasi-prepolymer), the choice of the particular TDI prepolymer, the choice of optional additives, as well as the MDI isomer ratio. In general, the isomer ratio of diphenylmethane diisocyanate in the present invention is from about 10% to about 90% of 2,4'-diphenylmethane diisocyanate and from about 90% to about 10% of 4,4'-diphenylmethane diisocyanate, preferably from about 20% to about 80% of 2,4'-diphenylmethane diisocyanate and from about 80% to about 20% of 4,4'-diphenylmethane diisocyanate, more preferably from about 25% to about 75% of 2,4'-diphenylmethane diisocyanate and from about 75% to about 25% of 4,4'-diphenylmethane diisocyanate, and most preferably from about 35% to about 65% of 2,4'-diphenylmethane diisocyanate and from about 65% to about 35% of 4,4'-diphenylmethane diisocyanate, by weight.

The amount of toluene diisocyanate prepolymer present in the prepolymer blend may be from about 10% to about 90%, preferably from about 20% to about 80%, and more preferably from about 30% to about 80%, by weight of the prepolymer blend.

The amount of diphenylmethane diisocyanate or diphenylmethane diisocyanate quasi-prepolymer present in the prepolymer blend may be from about 10% to about 90%, preferably from about 20% to about 80%, and more preferably from about 20% to about 70%, by weight of the prepolymer blend.

The prepolymer blend has an %NCO content from about 5% to about 25%, preferably from about 7% to about 20%, and more preferably from about 10% to about 20%.

As set out above, when high TDI/polyol ratios are employed in the reaction process to obtain a low oligomer content, large amounts of TDI monomer must generally be removed after the reaction to obtain a low residual monomer level. Substantial oligomer formation and other side reactions can occur during this removal phase. For this reason, if distillation techniques are used to remove free TDI, the wiped film distillation technique, optionally using a countercurrent inert gas sweep, is one method that maybe employed to avoid oligomerization during prepolymer purification.

The prepolymer blend and/or polyurea elastomer may optionally contain additives providing the additive does not adversely affect the character of the composition. The optional additives generally are not reactive with the other components of the side to which they are being added and must not interfere with the application technique. Illustrative examples of optional additives that may be incorporated into the prepolymer blend and/or spray polyurea elastomer include fillers, plasticizers, catalysts, dyes, inhibitors, antioxidants, UV absorbers, waxes, adhesion promoters (e.g., silane), as well as other conventional additives.

Fillers may be incorporated into the prepolymer composition in the form of particulate matter, fibers or powders. These fillers may be any filler materials, which will not interfere with the other components in the prepolymer composition. Types of fillers include calcium carbonate, ceramics, glass, silica, quartz, mica, treated clay, titanium dioxide, boron nitrides, graphite, carbon black, asbestos, metals, barium , sulfate, talc or mixtures thereof. Preferred fillers include calcium carbonate, silica, clay, carbon black or mixtures thereof.

Plasticizers may also be incorporated in the prepolymer composition of the present invention. The plasticizer may be any composition which does not interfere with the efficacy of the other components and which facilitates processing and increases toughness and flexibility of the composition. Representative plasticizers include liquid aromatic ester plasticizers, including dioctyl phthalate esters; solid plasticizers, including dicyclohexyl phthalate, cyclohexane dimenthanol dibenzoate; plasticizers available under the SANTICIZER® from Monsanto, as well as propylene carbonates.

High-pressure impingement spray equipment will tolerate many fillers but larger particle sizes or other factors may cause the orifices in this spray equipment to become constricted and adversely affect the quality of the spray coating. Low-pressure spray equipment, including those incorporating static mixers rather than impingement mixers, may be more tolerant of certain types of additives. Two manufacturers of high-pressure impingement spray equipment are Gusmer (Lakewood, NJ) and Graco (Minneapolis, MN). There are numerous manufacturers of low-pressure equipment, especially low-pressure equipment employing static mixing. When low-pressure equipment employing static mixing is used, the spray attachment can often be removed to allow for use of the same materials in a stream, rather than a patterned spray. The novel polyurea elastomers may be applied by any conventional method.

The present invention also provides a polyurea elastomer comprising:

A) from about 10% to about 90% of a premixture blend, by weight of the polyurea elastomer, of:

a) from about 10% to about 90% of a toluene diisocyanate prepolymer, by weight of the prepolymer blend, comprising:

i) from about 10% to about 85% of a toluene diisocyanate, by weight of the toluene diisocyanate prepolymer; and

ii) from about 15% to about 90% of a polyol, by weight of the toluene diisocyanate prepolymer;

wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and

b) from about 10% to about 90% of a diphenylmethane diisocyanate or a diphenylmethane diisocyanate quasi-prepolymer, by weight of the prepolymer blend;
wherein the prepolymer blend has an %NCO content from about 5% to about 25%; and

B) from about 10% to about 90% of an amine-terminated chain extender or cross-linker, by weight of the polyurea elastomer.

As set out above, the two-part polyureathaneurea coating is generally supplied as a two-component material conventionally termed the A-side, containing the isocyanate-functional components, and the B-side, containing the isocyanate-reactive components. Illustrative non-limiting examples of isocyanate-reactive components useful in the B-side include predominantly amine-functional chain extenders and cross-linkers (functional-chain extenders have a functionality of 2 and cross-linkers have a functionality of greater than 2), but may also include polyols. Commonly used amines include diethyl-toluenediamine (DETDA, also known as E100 from Albermarle), dimethylthiotoluenediamine (also known as E300 from Albermarle), and alkyl methylenedianiline (alkyl MDA from Unilink® products). Diaminopoly(propylene glycols may also be used such as D230, D400, and D2000 (where the numeric designator refers to the overall molecular weight). Higher functionality products with similar backbones may also be used such as Jeffamine® T5000, a 5,000 molecular weight trifunctional poly(propylene glycol) triamine. Other aromatic and aliphatic amines may also be used. Polyol components having a functionality of at least 2 may also be employed, such as poly(propylene glycol), ethylene oxide-capped polypropylene glycol, and other polyethers, polyesters, and polycaprolactones. The polyols are generally employed at a lower level than the total amine, usually at 20% or less, of the B-side to maintain the ability to designate the system as a "pure" polyurea". Polyurethane-polyurea hybrids employ polyols in the B-side of the spray formulation in amounts greater than 20%, and pure polyurethanes employ all polyols in the B-side of the system. The B-side may also contain plasticizers (isocyanate-reactive or non-reactive), fillers, pigments, and/or catalysts. All optional additives added to the A-side or the B-side must not be reactive with the components in that respective side.

There are numerous methods for the preparation of the spray-applied polyurea coatings of the present invention. Many of these will be obvious to those skilled in the art. The A-side and the B-side may be formulated according to the needs of the final product. Conventional equipment is available that provides mixing and spraying at various ratios of the A-side and B-side of the spray polyurea system. A commonly used polyurea spray machine is Gusmer H20/35, which is designed for a 1:1 volume mix and spray ratio. In the case of a 1:1 ratio, the A-side and B-side are typically formulated such that upon mixing the curative will be present at 95% of the theoretical stoichiometry.
This ratio is also referred to as the isocyanate index or iso index, which is defined as the ratio of isocyanate to amine (or isocyanate-reactive components). A 95% stoichiometry of curative is equivalent to an iso index of about 1.05. This ratio may be altered to achieve specific, desired results in the final polyurea but is usually not altered more than about +/-10%. Commonly available A-side polyurea spray components are often in the 14-16%NCO range. Formulations within this range using the present invention would allow the use of commonly available curative (or B-side) formulations. The formulation of the A-side according to this invention is not limited to this %NCO range. The formulation latitude of the A-side and B-side of the spray polyurea formulation is limited only by the available materials and the availability of suitable spray equipment to accommodate the resultant ratio (i.e., 1:10 to 10:1).

In general, the polyurea elastomer comprises from about 10% to about 90% of the premixture blend and from about 10% to about 90% of the amine-terminated chain extender or cross-linker, preferably from about 20% to about 80% of the premixture blend and from about 20% to about 80% of the amine-terminated chain extender or cross-linker, more preferably from about 30% to about 70% of the premixture blend and from about 30% to about 70% of the amine-terminated chain extender or cross-linker, and most preferably from about 45% to about 55% of the premixture blend and from about 45% to about 55% of the amine-terminated chain extender or cross-linker, by weight of the polyurea elastomer.

In a specific embodiment, the present invention provides a method for preparing a prepolymer blend comprising:

a) providing a toluene diisocyanate prepolymer prepared by reacting:

i) from about 10% to about 85% of a toluene diisocyanate, by weight of the toluene diisocyanate prepolymer; and

ii) from about 15% to about 90% of a polyol, by weight of the toluene diisocyanate prepolymer; and

iii) removing monomeric toluene diisocyanate from the toluene diisocyanate prepolymer formed in i) and ii);

wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and

b) blending from about 10% to about 90% of the toluene diisocyanate prepolymer from a) with from about 10% to about 90% of a diphenylmethane diisocyanate or a diphenylmethane diisocyanate quasi-prepolymer, by weight of the prepolymer blend; wherein the prepolymer blend has an %NCO content from about 5% to about 25%.

In another specific embodiment, the present invention provides a method for preparing a polyurea elastomer comprising the steps of:

A) providing a premixture blend of:

a) a toluene diisocyanate prepolymer prepared by reacting:

i) from about 10% to about 85% of a toluene diisocyanate, by weight of the toluene diisocyanate prepolymer; and

ii) from about 15% to about 90% of a polyol, by weight of the toluene diisocyanate prepolymer; and

iii) removing monomeric toluene diisocyanate from the toluene diisocyanate prepolymer formed in i) and ii);

wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and

b) blending from about 10% to about 90% of the toluene diisocyanate prepolymer from a) with from about 10% to about 90% of a diphenylmethane diisocyanate or a diphenylmethane diisocyanate quasi-prepolymer, by weight of the prepolymer blend; wherein the prepolymer blend has an %NCO content from about 5% to about 25%; and

B) reacting from about 10% to about 90% of the premixture blend from A) with from about 10% to about 90% of an amine-terminated chain extender or cross-linker, by weight of the polyurea elastomer, to form the polyurea elastomer.

In other specific embodiments, the present invention provides methods for using the novel polyurea elastomers of the present invention in a variety of applications. Preferably, the polyurea elastomers are applied by spraying, troweling, casting, or caulking, more preferably the polyurea elastomers are applied by spraying, troweling, or caulking, and most preferably the polyurea elastomers are applied by spraying. Methods for using polyurea elastomers in conventional applications, such as spraying, troweling, casting, or caulking, are well known in the art.

The present invention can be further illustrated by the following examples of preferred embodiments thereof, although it will be understood that these examples are included merely for purposes of illustration and are not intended to limit the scope of the invention unless otherwise specifically indicated.

### EXAMPLES

The following examples illustrate the preparation of blends of TDI prepolymers of varying compositions and %NCO according to the present invention.

### Example 1.

A resin blend was prepared using a commercially available MDI blend containing 50-60% 2,4'-MDI and the remainder 4,4'-MDI. A quantity of 22.4%, by weight, of the MDI blend was mixed with a TDI prepolymer prepared from a 50:50 ratio of 2,4-TDI and 2,6-TDI reacted with a 9:2 w/w ratio of a polytetramethyleneetherglycol, average molecular weight 1000, (such as PTMEG 1000, a polytetramethyleneetherglycol available from Invista™ under the trade name of Terathane®) and diethylene glycol at a molar NCO:OH ratio of 8:1, followed by removal of the excess TDI by thin film evaporation. The final TDI prepolymer had a %NCO of 11.0% viscosity at 70°C. of 500-800 cps, residual TDI monomer level of <0.1% and oligomer content ,15%. The ratio of 2,4-TDI to 2,6-TDI components in the final TDI prepolymer was about 80/20. The blend of the TDI prepolymer and the MDI had an %NCO content of 16.1%.

The weight% of polyol in the TDI prepolymer was 53% and the weight% of TDI in the TDI prepolymer was 47%. The weight% of TDI prepolymer in the prepolymer blend was 77.6% and the weight% of the MDI component in the prepolymer blend was 22.4%. The weight% of TDI in the prepolymer blend was 26.4% and the weight% of polyol in the prepolymer blend was 41.1%.

### Example 2.

A resin blend was prepared using a commercially available MDI blend containing 50-60% 2,4'-MDI and the remainder 4,4'-MDI. A quantity of 36.4% of the MDI blend was mixed with a TDI prepolymer prepared from a 50:50 ratio of 2,4-TDI and 2,6-TDI isomer blend reacted with a polytetramethyleneetherglycol, average molecular weight 1000, at a molar NCO:OH ratio of 8:1, followed by removal of the excess TDI by thin film evaporation. The final TDI prepolymer had a %NCO of 6.25% viscosity at 70°C. of 350-500 cps, residual TDI monomer level of <0.1% and oligomer content ,15%. The ratio of 2,4-TDI to 2,6-TDI components in the final TDI prepolymer was about 80/20. The blend of the TDI prepolymer and the MDI had an %NCO content of 16.1 %.

The weight% of polyol in the TDI prepolymer was 74% and the weight% of TDI in the TDI prepolymer was 26%. The weight% of TDI prepolymer in the prepolymer blend was 73.6% and the weight% of the MDI component in the prepolymer blend was 26.4%. The weight% of TDI in the prepolymer blend was 19.1 % and the weight% of polyol in the prepolymer blend was 54.5%.

### Example 3.

A resin blend was prepared using a commercially available MDI blend containing 50-60% 2,4'-MDI and the remainder 4,4'-MDI. A quantity of 42.1% of the MDI was blended with a TDI prepolymer prepared from a 50:50 ratio of 2,4-TDI and 2,6-TDI isomer blend reacted with a polytetramethyleneetherglycol, average molecular weight 2000, (such as PTMEG 2000, a polytetramethyleneetherglycol available from Invista™ under the trade name of Terathane®) at a molar NCO:OH ratio of 8:1, followed by removal of the excess TDI by thin film evaporation. The final TDI prepolymer has a %NCO of 3.65% viscosity at 70°C. of 850-1300 cps, residual TDI monomer level of <0.1% and oligomer content <15%. The ratio of 2,4-TDI to 2,6-TDI components in the final TDI prepolymer was about 80/20. The blend of the TDI prepolymer and the MDI had an %NCO content of 16.2%.

The weight% of polyol in the TDI prepolymer was 85% and the weight% of TDI in the TDI prepolymer was 15%. The weight% of TDI prepolymer in the prepolymer blend was 67.9% and the weight% of the MDI component in the prepolymer blend was 32.1 %. The weight% of TDI in the prepolymer blend was 10.2% and the weight% of polyol in the prepolymer blend was 57.7%.

### Example 4.

This example illustrates the use of alternate polyols, in this case, polypropylene glycol (PPG).

A resin blend was prepared using a commercially available MDI blend containing 50-60% 2,4'-MDI and the remainder 4,4'-MDI. A quantity of 30% of the MDI was blended with a TDI prepolymer prepared from a 50:50 ratio of 2,4-TDI and 2,6-TDI isomer blend reacted with a Polypropylene glycol MW 2000/tripropylene glycol 3.3/1 at a molar NCO:OH ratio of 8:1, followed by removal of the excess TDI by thin film evaporation. The final TDI prepolymer has a %NCO of 7.50% viscosity at 70°C. of 320-475 cps, residual TDI monomer level of <0.1 % and oligomer content <15%. The ratio of 2,4-TDI to 2,6-TDI components in the final TDI prepolymer was about 80/20. The blend of the TDI prepolymer and the MDI had an %NCO content of 16.0%.

The weight% of polyol in the TDI prepolymer was 64% and the weight% of TDI in the TDI prepolymer was 36%. The weight% of TDI prepolymer in the prepolymer blend was 70% and the weight% of the MDI component in the prepolymer blend was 30%. The weight% of TDI in the prepolymer blend was 25.2% and the weight% of polyol in the prepolymer blend was 44.8%.

Examples A-D illustrate the ability to spray apply the coatings described in Examples 1-4 demonstrating improvements in one or more physical properties.

### Example A.

The isocyanate prepolymer mixture prepared according to Example 1 was spray applied to a waxed panel at a 1:1 volume ratio using an amine curative (B-side) containing Ethacure E-100; Jeffamine® D2000 and Jeffamine® T5000 (T-5000 at 3-5%, balance E100/D2000 blended to provide an amine equivalent weight of 271). Both the A-side and B-side were heated to a temperature of 160°F. and mixed in an impingement-style spray gun (commercially available from Gusmer, Lakewood, NJ). The gel time was 9s and the tack-free time was 19s. The resultant plaque had a smooth surface and remained tacky to the touch for 3-5 minutes after spraying. The plaque was cured at 140°F overnight to accelerate the testing cycle. The physical test data is given in Table 1 below.

### Example B.

The procedure described in Example A was repeated using the isocyanate prepared in Example 2. The gel time was 9s and the tack-free time was 16s. The surface remained slightly tacky to the touch for 1-2 minutes. The surface was glossy with a very slight ripple. The plaque was cured at 140°F overnight to accelerate the testing cycle. The physical test data is given in Table 1 below.

### Example C.

The procedure described in Example A was repeated using the isocyanate prepared in Example 3. The gel time was 5s and the tack-free time was 10s. The surface exhibited no significant surface tack immediately after spraying.. The surface was glossy with a slight ripple. The plaque was cured at 140°F overnight to accelerate the testing cycle. The physical test data is given in Table 1 below.

### Example D.

The procedure described in Example A was repeated using the isocyanate prepared in Example 4. The gel time was 6s and the tack-free time was 15s. The surface exhibited no significant surface tack immediately after spraying.. The surface was glossy with a very slight ripple. The plaque was cured at 140°F overnight to accelerate the testing cycle. The physical test data is given in Table 1 below.

### Comparative Examples E, F, G, and H.

Comparative Examples E, F, G, and H were prepared according to "Tuning the Properties of Polyurea Elastomer Systems using Raw Material Selection and Processing Parameter Modulation, Reddinger, Jerry L.; Hillman, Kenneth M., PU Latin America 2001, International Polyurethanes Conference & Exhibition for Latin America, Conference Papers, Sao Paulo, Brazil, Aug. 28-30, 2001 (2001), P32/1-P32/7. CODEN: 69COBM CAN 137:264227 AN 2002:357450 CAPLUS.

The A-side of the formulation of the comparative examples was MDI-based with a %NCO of 15.4%, such as Rubinate® 9480, a quasi prepolymer described as having high 2,4-MDI content. Example G was a MDI quasi prepolymer with a %NCO of 19.6%.

The B-side of the formulation of the comparative examples is set out below. In each case, the polyurea elastomer was prepared using a 1:1 volume ratio of the A-side to the B-side, weight ratio approximately 1.1-1.15/1.

| | Jeffamine® D2000 | Jeffamine® T5000 | Jeffamine® D400 | Unilink® 4200 | DETDA | Iso Index |
|---|---|---|---|---|---|---|
| E | 65.68 | 5.57 | | | 28.76 | 1.05 |
| F | 57.45 | 10.64 | | 10.64 | 21.28 | 1.10 |
| G | 33.54 | 10 | 20 | 15 | 21.5 | 1.10 |
| H | 52.02 | 5.33 | | 29.85 | 12.79 | 1.05 |

**Table 1.**

| **Physical Test Data** | | | | | | | | | |
|---|---|---|---|---|---|---|---|---|---|
| Description Example | Ultimate Tensile | Elongation @ break | 100% modulus | 200% modulus | 300% modulus | Die C tear | Tabor abrasion #22 | Gel time | Tack free time |
| A | 4091 | 274 | 1904 | 2859 | na | 609 | 0.2000 | 9s | 19s |
| D | 4282 | 350 | 1613 | 2268 | 3450 | 578 | 0.3600 | 6 | 15 |
| C | 4295 | 378 | 1399 | 1959 | 3001 | 578 | 0.2000 | 5 | 10 |
| B | 4109 | 310 | 1498 | 2334 | 3499 | 520 | 0.1800 | 9 | 16 |
| E | 2488 | 467 | 1212 | -- | 1823 | 505 | -- | 4 | 7 |
| F | 2662 | 532 | 1173 | -- | 1753 | 482 | -- | 5.5 | 10 |
| G | 2772 | 268 | 1946 | -- | -- | 541 | -- | 3.5 | 6.5 |
| H | 2128 | 529 | 1027 | | 1471 | 456 | | 7 | 12.5 |

Table 1 shows that the TDI prepolymer blend based polyurea elastomers have significantly better physical properties than purely MDI based polyurea elastomers. The tensile strengths for similar formulations are significantly higher, with better modulus values except versus comparative example G. The higher modulus in comparative example G is achieved by increasing the %NCO of the A-side, but results in no significant increase in tensile strength and also results in considerably reduced gel and tack-free times, even though the dialkyl-methylenedianiline (Unilink® 4200) was used to help extend the gel time and tack-free time. In example H, the gel time was extended by using significantly more Unilink® 4200, but resulted in decreases in all physical properties except % elongation.

The invention being thus described, it will be obvious that the same may be varied in many ways. Such variations are not to be regarded as a departure from the spirit and scope of the invention and all such modifications are intended to be included within the scope of the following claims.

## Claims

1. A prepolymer blend comprising:
a) from about 10% to about 90% of a toluene diisocyanate prepolymer, by weight of the prepolymer blend, comprising:
i) from about 10% to about 85% of a toluene diisocyanate, by weight of the toluene diisocyanate prepolymer; and
ii) from about 15% to about 90% of a polyol, by weight of the toluene diisocyanate prepolymer;
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and
b) from about 10% to about 90% of a diphenylmethane diisocyanate or a diphenylmethane diisocyanate quasi-prepolymer, by weight of the prepolymer blend;
wherein the prepolymer blend has an %NCO content from about 5% to about 25%.

2. The prepolymer blend according to claim 1, wherein the toluene diisocyanate comprises from about 65% to about 100% of 2,4-toluene diisocyanate and from about 0% to about 35% of 2,6-toluene diisocyanate, by weight of the toluene diisocyanate prepolymer.

3. The prepolymer blend according to claim 1, wherein the toluene diisocyanate is present in an amount from about 10% to about 75%, by weight of the toluene diisocyanate prepolymer.

4. The prepolymer blend according to claim 1, wherein the polyol is selected from the group consisting of poly(tetramethylene glycol), poly(propylene glycol), ethylene oxide capped poly(propylene glycol), poly(ethylene glycol), poly(ethylene adipate), poly(propylene adipate), poly(butylene adipate), poly(caprolactone), diethylene glycol, tripropylene glycol, trimethylol propane, and mixtures thereof.

5. The prepolymer blend according to claim 1, wherein the polyol is present in an amount from about 25% to about 90%, by weight of the toluene diisocyanate prepolymer.

6. The prepolymer blend according to claim 1, wherein the toluene diisocyanate prepolymer has a residual free monomeric toluene diisocyanate content of less than about 0.1 %.

7. The prepolymer blend according to claim 1, wherein the toluene diisocyanate prepolymer has an oligomer content less than about 15%.

8. The prepolymer blend according to claim 1, wherein the diphenylmethane diisocyanate comprises from about 10% to about 90% of 2,4'-diphenylmethane diisocyanate and from about 10% to about 90% of 4,4'-diphenylmethane diisocyanate, by weight.

9. The prepolymer blend according to claim 1, wherein the toluene diisocyanate prepolymer is present in an amount from about 20% to about 80% and the diphenylmethane diisocyanate or diphenylmethane diisocyanate quasi-prepolymer is present in an amount from about 20% to about 80%, by weight of the prepolymer blend.

10. The prepolymer blend according to claim 1, wherein the prepolymer blend has an %NCO content from about 7% to about 10%.

11. A polyurea elastomer comprising:
A) from about 10% to about 90% of a premixture blend, by weight of the polyurea elastomer, of:
a) from about 10% to about 90% of a toluene diisocyanate prepolymer, by weight of the prepolymer blend, comprising:
i) from about 10% to about 85% of a toluene diisocyanate, by weight of the toluene diisocyanate prepolymer; and
ii) from about 15% to about 90% of a polyol, by weight of the toluene diisocyanate prepolymer;
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and
b) from about 10% to about 90% of a diphenylmethane diisocyanate or a diphenylmethane diisocyanate quasi-prepolymer, by weight of the prepolymer blend;
wherein the prepolymer blend has an %NCO content from about 5% to about 25%; and
B) from about 10% to about 90% of an amine-terminated chain extender or cross-linker, by weight of the polyurea elastomer.

12. The polyurea elastomer according to claim 11, wherein the toluene diisocyanate comprises from about 65% to about 100% of 2,4-toluene diisocyanate and from about 0% to about 35% of 2,6-toluene diisocyanate, by weight of the toluene diisocyanate prepolymer.

13. The polyurea elastomer according to claim 11, wherein the toluene diisocyanate is present in an amount from about 10% to about 75%, by weight of the toluene diisocyanate prepolymer.

14. The polyurea elastomer according to claim 11, wherein the polyol is selected from the group consisting of poly(tetramethylene glycol), poly(propylene glycol), ethylene oxide capped poly(propylene glycol), poly(ethylene glycol), poly(ethylene adipate), poly(propylene adipate), poly(butylene adipate), poly(caprolactone), diethylene glycol, tripropylene glycol, trimethylol propane, and mixtures thereof.

15. The polyurea elastomer according to claim 11, wherein the polyol is present in an amount from about 25% to about 90%, by weight of the toluene diisocyanate prepolymer.

16. The polyurea elastomer according to claim 11, wherein the toluene diisocyanate prepolymer has a residual free monomeric toluene diisocyanate content of less than about 0.1 %.

17. The polyurea elastomer according to claim 11, wherein the toluene diisocyanate prepolymer has an oligomer content less than about 15%.

18. The polyurea elastomer according to claim 11, wherein the diphenylmethane diisocyanate comprises from about 10% to about 90% of 2,4'-diphenylmethane diisocyanate and from about 10% to about 90% of 4,4'-diphenylmethane diisocyanate, by weight.

19. The polyurea elastomer according to claim 11, wherein the toluene diisocyanate prepolymer is present in an amount from about 20% to about 80% and the diphenylmethane diisocyanate or diphenylmethane diisocyanate quasi-prepolymer is present in an amount from about 20% to about 80%, by weight of the prepolymer blend.

20. The polyurea elastomer according to claim 11, wherein the prepolymer blend in A) has an %NCO content from about 7% to about 20%.

21. The polyurea elastomer according to claim 11, wherein the amine-terminated chain extender or cross-linker is selected from the group consisting of diethyl-toluenediamine, dimethylthiotoluenediamine, alkyl methylenedianilines, diaminopoly(propylene glycols), poly(propylene glycol) triamines, and mixtures thereof.

22. The polyurea elastomer according to claim 11, wherein the premixture blend A) is present in an amount from about 20% to about 80% and the amine-terminated chain extender or cross-linker in B) is present in an amount from about 20% to about 80%, by weight of the polyurea elastomer.

23. A method for preparing a prepolymer blend comprising:
a) providing a toluene diisocyanate prepolymer prepared by reacting:
i) from about 10% to about 85% of a toluene diisocyanate, by weight of the toluene diisocyanate prepolymer; and
ii) from about 15% to about 90% of a polyol, by weight of the toluene diisocyanate prepolymer; and
iii) removing monomeric toluene diisocyanate from the toluene diisocyanate prepolymer formed in i) and ii);
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and
b) blending from about 10% to about 90% of the toluene diisocyanate prepolymer from a) with from about 10% to about 90% of a diphenylmethane diisocyanate or a diphenylmethane diisocyanate quasi-prepolymer, by weight of the prepolymer blend;
wherein the prepolymer blend has an %NCO content from about 5% to about 25%.

24. A method for preparing a polyurea elastomer comprising the steps of:
A) providing a premixture blend of:
a) a toluene diisocyanate prepolymer prepared by reacting:
i) from about 10% to about 85% of a toluene diisocyanate, by weight of the toluene diisocyanate prepolymer; and
ii) from about 15% to about 90% of a polyol, by weight of the toluene diisocyanate prepolymer; and
iii) removing monomeric toluene diisocyanate from the toluene diisocyanate prepolymer formed in i) and ii);
wherein the functionality of the polyol is from about 2 to about 3 and is selected such that the toluene diisocyanate prepolymer has an %NCO content from about 1.5% to about 14%, a viscosity from about 50cps to about 5,000cps at 70°C., a residual free monomeric toluene diisocyanate content of less than about 0.5%, and an oligomer content less than about 40%; and
b) blending from about 10% to about 90% of the toluene diisocyanate prepolymer from a) with from about 10% to about 90% of a diphenylmethane diisocyanate or a diphenylmethane diisocyanate quasi-prepolymer, by weight of the prepolymer blend;
wherein the prepolymer blend has an %NCO content from about 5% to about 25%; and
B) reacting from about 10% to about 90% of the premixture blend from A) with from about 10% to about 90% of an amine-terminated chain extender or cross-linker, by weight of the polyurea elastomer, to form the polyurea elastomer.
